# Europäisches Patentamt

# European Patent Office

# Office européen des brevets

(19)

(11) Veröffentlichungsnummer: **0 080 139 B1**

(12) **EUROPÄISCHE PATENTSCHRIFT**

(45) Veröffentlichungstag der Patentschrift:
09.03.88

(51) Int. Cl.⁴: **B 60 L 3/10**

(21) Anmeldenummer: **82110502.0**

(22) Anmeldetag: **13.11.82**

(54) Verfahren und Vorrichtung zur Steuerung oder Regelung der Achsdrehmomente eines Schienentriebfahrzeuges insbesondere Schienenfahrzeugzuges, abhängig von den Raddurchmessern.

(30) Priorität: 21.11.81 DE 3146239

(43) Veröffentlichungstag der Anmeldung:
01.06.83 Patentblatt 83/22

(45) Bekanntmachung des Hinweises auf die Patenterteilung:
09.03.88 Patentblatt 88/10

(84) Benannte Vertragsstaaten:
AT BE CH FR GB IT LI NL SE

(56) Entgegenhaltungen:
DE - A - 1 814 504
DE - A - 2 151 673
DE - A - 3 008 279
FR - A - 2 351 817
FR - A - 2 451 126

K.SACHS: "Elektrische Triebfahrzeuge" Bd.2, Wien, New York, 1973, S.640

(73) Patentinhaber: Mies, Arnold, Dipl.-Ing., Georgieweg 17, D-2000 Hamburg 61 (DE)

(72) Erfinder: Mies, Arnold, Dipl.-Ing., Georgieweg 17, D-2000 Hamburg 61 (DE)

(74) Vertreter: Hanewinkel, Lorenz, Dipl.-Phys., Patentanwalt Ferrariweg 17a, D-4790 Paderborn (DE)

## Beschreibung

Die Erfindung betrifft ein Verfahren und eine Vorrichtung zur Drehmomentsteuerung für Achsen von Schienentriebfahrzeugen, insbesondere Schienenfahrzeugzügen, mit mehreren Achsen oder Achsgruppen, die jeweils mit gesonderten, Asynchronmotoren aufweisenden Antriebseinrichtungen verbunden sind, wobei im antriebs- und bremsungsfreien Fahrzustand die Achsdrehzahlen gemessen werden und aus dem Verhältnis eines die Fahrzeuggeschwindigkeit repräsentierenden Bezugswertes zur Achsdrehzahl ein Korrekturfaktor für die laufend gemessenen Drehzahlen gebildet und, zwecks entsprechender Berücksichtigung bei einer Drehmomentsteuerung im Antriebs- oder Bremszustand, gespeichert wird, wobei die Drehmomentsteuerung unter Vorgabe eines Drehfeldschlupf-Sollwertes erfolgt.

Insbesondere im öffentlichen Nahverkehr soll eine im Fahrplan fixierte Fahrzeit zwischen allen Stationen einer Linie sowie auf der Gesamtlinie möglichst genau eingehalten werden. Die Fahrplaneinhaltung ist ein wesentlicher Teil der Attraktivität des öffentlichen Nahverkehrs. Die Fahrzeit zwischen zwei Stationen im öffentlichen Nahverkehr ist im wesentlichen durch die Elemente Anfahren, Auslauf und Bremsen gekennzeichnet. Die Toleranz der Fahrzeit ist dabei möglichst gering zu halten.

Weitere geforderte Qualitätsmerkmale eines Transportvorganges sind hohe Reisegeschwindigkeiten für den Fahrgast und geringe Transportkosten für das Verkehrsunternehmen. Beide Bedingungen schliessen einander nicht aus, da sowohl hohe Anfahrbeschleunigung und hohe Bremsverzögerung zur Erzielung hoher Reisegeschwindigkeiten bei den im Nahverkehr geringen Haltestellenabständen erforderlich ist, als auch hohe Anfahrbeschleunigung und hohe Bremsverzögerung bei gegebener Fahrplan-Fahrzeit eine geringe Traktionsenergieaufnahme bewirkt, da bei gleicher Fahrzeit zwischen zwei Haltestellen ein Fahrzeug mit höherer Beschleunigung einen geringeren Energieverbrauch als ein Fahrzeug mit geringerer Beschleunigung, bei gleichem Fahrzeuggewicht hat.

Weiterhin hält die durch die hohe Anfahrbeschleunigung und hohe Bremsverzögerung erzielte Reisegeschwindigkeit die Anzahl der zur Bewältigung der Verkehrsaufgabe notwendigen Fahrzeugmengen klein. Eine Teilaufgabe ist deshalb, dass mit möglichst hoher Anfahrbeschleunigung und möglichst hoher Bremsverzögerung gefahren wird, allerdings unter Einhaltung einer oberen Grenze mit Rücksicht auf stehende Fahrgäste. Anders formuliert besagt dies, dass der zur Übertragung der Antriebs- und Bremskräfte notwendige Haftwert zwischen Rad und Schiene maximal ausgenutzt werden soll, wobei also die Haftwertinanspruchnahme für alle Räder möglichst gleich sein soll. Dies wird primär dadurch ermöglicht, dass mehrere oder alle Achsen der Triebwagenzüge durch Motoren angetrieben werden. Es hat sich gezeigt, dass getrennte Antriebe allein nicht in allen Fällen ausreichend zur Lösung des Problems sind. Zwei Einflüsse lassen es zweckmässig erscheinen, zusätzliche Massnahmen zu ergreifen, um die gewünschte hohe Beschleunigung oder Bremsung jeweils zu erreichen. Der erste Einfluss entsteht durch die unterschiedliche Besetzung der Fahrzeuge mit Passagieren, der zweite entsteht dadurch, dass beim zufälligen Zusammenkuppeln von Triebwagen zu Triebwagenverbänden Fahrzeuge unterschiedlicher Radreifenabnutzung gekuppelt werden. Maximale Unterschiede im letzten Fall betragen zum Beispiel 860 mm bis 790 mm; das ergibt eine maximale Differenz von 70 mm; das ist ∼8%.

Bei den bisher üblichen Gleichstromantrieben traten zwar im gewissen Grad den Anforderungen gemässe Drehmomente an den Achsen entsprechend der günstigen Drehmoment-/Drehzahlkennlinie auf. Diese Anpassung des Drehmomentes an den Raddurchmesser ist aber nicht immer ausreichend, so dass bei extremer Wetterlage, die negative Auswirkung auf den Haftwert hat, ein fahrplangenauer Betrieb in Frage gestellt ist.

Aus DE-A-18 14 504 ist es bekannt, Achsen von Schienenfahrzeugen über zugeordnete Gleichstrommotore mit zugeordneten Regelvorrichtungen anzutreiben, wobei die Regelvorrichtungen so arbeiten, dass alle Anker gleiche Ströme aufnehmen indem die Statorfelder der schneller drehenden Achsen entsprechend verringert werden. Dies führt zu erhöhten Ankerverlusten und einer verschlechterten Ausnutzung dieser mit reduziertem Feld arbeitenden Motore.

Aus DE-A-30 08 279 ist es bekannt, ein Schienenfahrzeug mit mehreren asynchronen, mit einer einzigen gesteuerten Feldfrequenz betriebenen, Einzelantrieben der Achsen auszustatten und eine der Achsen mit einem Antrieb geringerer Leistung zu versehen, so dass deren Räder mit grossen Wahrscheinlichkeit nicht zum Gleiten kommen und nur geringer Abnutzung unterliegen. Es wird im antriebs- und bremsungsfreien Fahrzustand aus den Drehzahlen der voll angetriebenen Achsen ein Mittelwert gebildet, der zur Drehzahl der leicht angetriebenen Achse ins Verhältnis gesetzt wird. Mit dem gespeicherten Verhältnis wird im Antriebs- und Bremsbetrieb das Drehzahlsignal der leicht angetriebenen Achse multipliziert, und es wird daraus eine Spannungs- und eine Drehfeldfrequenzvorgabe für eine gemeinsame Regelvorrichtung zur Ansteuerung der asynchronen Antriebe der voll angetriebenen Achsen bestimmt. Soweit die voll angetriebenen Räder auch nur geringe unterschiedliche Abnutzung haben, führt diese gemeinsame Ansteuerung insbes. wegen des sehr steilen Verlaufs der Momenten-/Drehzahlkurve dazu, dass der Motor der Räder, die sich am langsamsten drehen, einen überproportional sehr hohen Strom aufnimmt und so das höchste Motordrehmoment entwickelt, so dass das Gleiten dieser Räder häufig auftritt und deren Abnutzung überproportional gesteigert wird. Umgekehrt erbringen die Motore mit den kleineren Rädern einen unterproportional geringeren Beitrag zum Antrieb. Weiterhin ist nachteilig, dass das leicht angetriebene Räderpaar nicht voll zum Antrieb genutzt wird.

Bei einem Drehstromantrieb tritt gegenüber einem Gleichstromantrieb eine weitere Schwierigkeit auf, da für alle Antriebe die gleichen Drehmoment- oder Drehzahlvorgaben erfolgen und im Gegensatz zum Gleichstromantrieb, bei ihm durch die schleifenden Schnitte der Motorkennlinien von Drehmoment und Drehzahl bei dem über die Schiene erzwungenen Gleichlauf sehr unterschiedliche Kräfte von den einzelnen Antrieben auf die Schiene übertragen werden.

Insbesondere wenn die Antriebs- und Bremsmomente von frequenzgesteuerten Drehstrommotoren erzeugt werden und eine Ansteuerung der zugehörigen Motoren mit einem Ansteuerungssystem, das die gleiche Frequenz für alle Motoren dieses Triebwagenverbandes vorgibt, erfolgt, ergeben sich sehr unterschiedliche Antriebs- und Bremsmomente, da die Drehzahlen der Achsen durch die Durchmesser der Radreifen bestimmt sind und aus den Drehzahlen sich entsprechend der Momentenkennlinie der Motoren die Momente unterschiedlich ergeben, wodurch unter Umständen langsam drehende Achsen über dem Kippmoment liegen und die schnelldrehenden Achsen gleichzeitig ein Bremsmoment abgeben.

Es ist Aufgabe der Erfindung ein Verfahren zur Drehmomentsteuerung für Achsen von Schienentriebfahrzeugen insbesondere Schienenfahrzeugzügen und ein dafür geeignetes Schientriebfahrzeug nach den Gattungsbegriffen der Ansprüche 1 bzw. 11 anzugeben, wobei unter Berücksichtigung unterschiedlicher Radreifendurchmesser von willkürlich miteinander zu Triebfahrzeugzügen koppelbarer Triebfahrzeuge eine möglichst gleiche Haftwertausnutzung erreicht wird und dabei alle Antriebe mit annähernd gleichen Betriebsbedingungen arbeiten.

Die Lösung der Aufgabe ist in den kennzeichnenden Teilen der Ansprüche 1 bzw. 11 angegeben.

Negative Beschleunigungen bewirken ggf. eine entsprechende Ansteuerung der Bremsvorrichtungen. In vereinfachter Ausführung können die Regelvorrichtungen auch Steuervorrichtungen sein.

Statt der Drehzahlwerte können auch die Drehzeiten der Achsen gemessen und invers ausgewertet werden. Die Berücksichtigung verschiedener Einflüsse auf die Haftwerte wird nach einer Weiterentwicklung weiterhin dadurch erreicht, dass das jeweilige Drehmoment, das auf eine Achse wirkt, so geregelt wird, dass nach ihrem übertragenen Gewichtsanteil und ihrem angetriebenen Raddurchmesser jeweils soviel Kraft auf die Schiene übertragen wird, wie sie vorzugsweise im Verhältnis des Raddurchmessers zu den anderen Rädern des Schienenfahrzeugverbandes Anteil am Gesamtgewicht als Teil des Schienenfahrzeugverbandes hat.

Eine weitere Aufgabe der Erfindung besteht darin, die Haftwerte der Räder so zu nutzen, so dass eine geregelte Fahrplaneinhaltung in praktisch allen Fällen sichergestellt werden kann. Weitere vorteilhafte Ausgestaltungen der Erfindung bestehen darin, dass die Steuerung in einfacher Weise Schleuder- und Gleitschutzverfahren, z.B. durch dosierte Reduzierung der Anfahrbeschleunigung und Bremsverzögerung bei ganz extremen Haftverhältnissen zusätzlich beinhaltet, wodurch es erst gar nicht zu einem Schleudern oder Gleiten wegen zu hoher Anfahrbeschleunigung und zu hoher Bremsverzögerung kommt.

Es wird vorzugsweise nach Beendigung des ersten Anfahrvorganges eines neu gebildeten Schienenfahrzeugzugverbandes in einer stromlosen Auslaufphase die sich ergebende schlupflose Drehzahl jeder einzelnen Achse oder der Achsen eines Drehgestells oder Fahrzeuges über einen festen Weg, oder eine feste Zeit oder bis zum erneuten Einsatz des Antriebes oder einer Bremsung, gemessen und in einem jeder Achse oder den Achsen eines Drehgestells zugeordneten Speicher gespeichert. Diese Messgrössen werden mit einer Bezugsgrösse zum Beispiel dem Maximal, Minimal- oder Mittelwert der Messgrössen oder einer Messgrösse zum Beispiel der Geschwindigkeit des Fahrzeuges verglichen, und die sich daraus ergebenden Verhältniswerte werden in einem Speicher je Achse festgehalten. Bei den weiteren Anfahr- und Bremsvorgängen werden die Sollgrössen der Regelung der Drehmomente oder der Frequenzerzeugung für die Motordrehzahlen jeder einzelnen Achse durch dieses jeweils zugeordnete Verhältnis bestimmt, so dass jede einzelne Achse des Fahrzeuges oder Triebwagenverbandes einen gleichen Anteil der Vortriebs- oder Bremskraft am gesamten Zug beiträgt.

Die Steuerung des Drehmomentes erfolgt dabei in an sich bekannter Weise, indem zum Beispiel die Speisung der Elektromotoren variiert wird. Dies erfolgt je nach Bauart des Antriebes durch Beeinflussung von Spannung, Strom, Veränderung des Phasenanschnittwinkels oder Änderung der Frequenz des Drehfeldes. Entsprechendes gilt bei Generatorbremsung. Falls eine Bremsung mit Druckluftbremsen oder dergleichen vorgesehen ist, kann das Bremsdrehmoment durch Druckvariation gesteuert werden.

Eine Vereinfachung ergibt sich, wenn man nur die Drehzahl jeweils einer Achse jedes Wagens eines Zuges misst, da normalerweise bei einem Wagen alle Räder mehr oder weniger gleichmässig abgenutzt sind. Beim Anfahren und Bremsen wird dann auf alle Räder dieses Wagens das gleiche Drehmoment ausgeübt beziehungsweise die gleiche relative Erhöhung oder Erniedrigung der Frequenz der Drehfelder bewirkt. Eine noch bessere Ausnutzung der grösst möglichen Beschleunigung und Verzögerung kann man jedoch erreichen, wenn Messung und Steuerung an allen angetriebenen und/oder mit Bremseinrichtungen versehenen Achsen einzeln vorgenommen wird, da dadurch auch der Fall erfasst wird, dass die einzelnen Achsen eines Wagens verschieden stark abgenutzte Räder aufweisen.

Die Messung der Drehzahlen erfolgt durch Drehzahlmesser; bzw. die Umdrehungen der Achsen werden mit einem Umdrehungszähler während eines vorbestimmten Zeitraums gemessen. Es werden dann die Drehzahlen, bzw. die Zahl der Umdrehungen in diesem bestimmten Zeitraum gemessen, verglichen und gespeichert. Statt der Drehzahl kann auch jeweils die Zeit für eine oder eine bestimmte Zahl Umdrehungen gemessen, verglichen und gespeichert werden, wobei sich das inverse Verhältnis ergibt.

Man könnte an sich sämtliche Verhältnisse von Drehzahlen speichern. Bei N Achsen müssten dann N (N–1)/2 Werte gespeichert werden. Diese Zahl wird auf N verringert, wenn jeweils die Drehzahl bzw. Drehzeit für jede Achse bezüglich eines Bezugswertes gespeichert werden. Der Bezugswert kann dabei zum Beispiel der Maximal, Minimal- oder der Mittelwert der Drehzahl von allen Achsen sein.

Um möglichst exakte Werte für Beschleunigung und Verzögerung zu erreichen, ist es vorteilhaft, ausser den Drehzahlen oder Drehzeiten auch die Geschwindigkeit des Zuges zu messen. Es ist daher besonders zweckmässig, als Bezugswert die Geschwindigkeit gleichzeitig mit den Drehzahlen der Achsen zu messen und zu speichern.

Die Messwerte sind natürlich je nach Geschwindigkeit oder Messstrecke oder Messzeit unterschiedlich. Die Verhältnisse zwischen Bezugswert und Drehzahl sind dagegen für jede Achse unabhängig von der Messzeit oder -dauer.

Sofern davon ausgegangen werden kann, dass Gruppen von Achsen Räder gleichen Durchmessers antreiben, genügt es für diese Gruppen von Achsen, zum Beispiel für alle Achsen eines Achsgestells, die Drehzahlen und das Verhältnis zum Bezugswert zu speichern.

Die Berechnung und Speicherung erfolgt einmalig, zum Beispiel automatisch nach dem Zusammenkoppeln eines Zuges oder nach jedem Stillstand, wenn sich der Zug zum ersten Mal antriebslos bewegt, das heisst nicht abgebremst und nicht beschleunigt wird. Eine weitere ständige Anpassung an die Verhältnisse ergibt sich dadurch, dass Messungen und Speicherungen zum Beispiel im antriebslosen und bremsungsfreien Zustand mehrfach oder ständig durchgeführt werden. Die Verhältnisse werden dabei laufend neu bestimmt, oder es werden laufend die Mittelwerte aufeinanderfolgender Messungen gebildet, gespeichert und zur Steuerung abgegeben.

Eine vorteilhafte Weiterentwicklung des Verfahrens besteht darin, dass die Achslast der einzelnen angetriebenen Achsen, Achsgruppen oder Fahrzeuge gemessen wird oder dass die Zahl der Fahrgäste in einem Fahrzeug jeweils zum Beispiel durch Lichtschranken an den Türen ermittelt wird und der Sollwert zur Regelung der Antriebskräfte jeweils abhängig von diesen gemessenen Grössen bestimmt wird. Die Kraft, die übertragbar ist, ohne dass ein Gleiten eines Rades auf einer Schiene oder Fahrbahn auftritt, ist proportional zur Belastung des Rades. Andererseits ist eine um so höhere Antriebskraft für die gleiche Beschleunigung erforderlich, je höher die Masse des Fahrzeuges also dessen Besetzung oder Beladung ist.

Die mögliche Anfahrbeschleunigung und Bremsverzögerung werden bei Schienenfahrzeugen vom Haftwert begrenzt. Überschreitet die Anfahrkraft oder Bremskraft bei einem Rad die Kraft, die durch die Haftreibung zwischen Schiene und Rad noch aufgenommen werden kann, so gleitet das Rad beim Bremsen beziehungsweise dreht es beim Anfahren durch. Es wird dann bei diesem Rad praktisch keine Kraft mehr übertragen. Um also möglichst grosse Antriebsbeschleunigungen und Bremsverzögerungen zu erreichen, muss verhindert werden, dass angetriebene oder abgebremste Räder und seien es auch nur die Räder einzelner Achsen oder Achsengruppen, ins Gleiten kommen.

Es ist daher eine vorteilhafte Weiterentwicklung des Verfahrens, auch während des getriebenen und gebremsten Zustandes die Drehzahlen bzw. Drehzeiten ständig zu messen, deren Verhältnisse zu bilden und diese mit den gespeicherten Verhältnissen zu vergleichen. Sofern bei diesem Vergleich eine vorgegebene Toleranzgrenze über- oder unterschritten wird, liegt ein Blockieren oder Durchdrehen der zugehörigen Räder also ein verbotener Gleitzustand vor. Der entsprechende Zustand wird dem Regler signalisiert und löst eine Verminderung des Drehmomentes bzw. eine Lösung der Bremsen aus, indem der Sollwert von seinem Ausgangswert erheblich reduziert wird.

Da das Gleiten häufig nur auf begrenzten Abschnitten der Schiene oder Fahrbahn auftritt, ist es eine zweckmässige Weiterbildung des Verfahrens, dass der reduzierte Sollwert schrittweise nach jedem folgenden Vergleich der Messwerte, solange keine Grenzwertüberschreitung erfolgt, wieder bis zum bestimmten Ausgangswert erhöht wird.

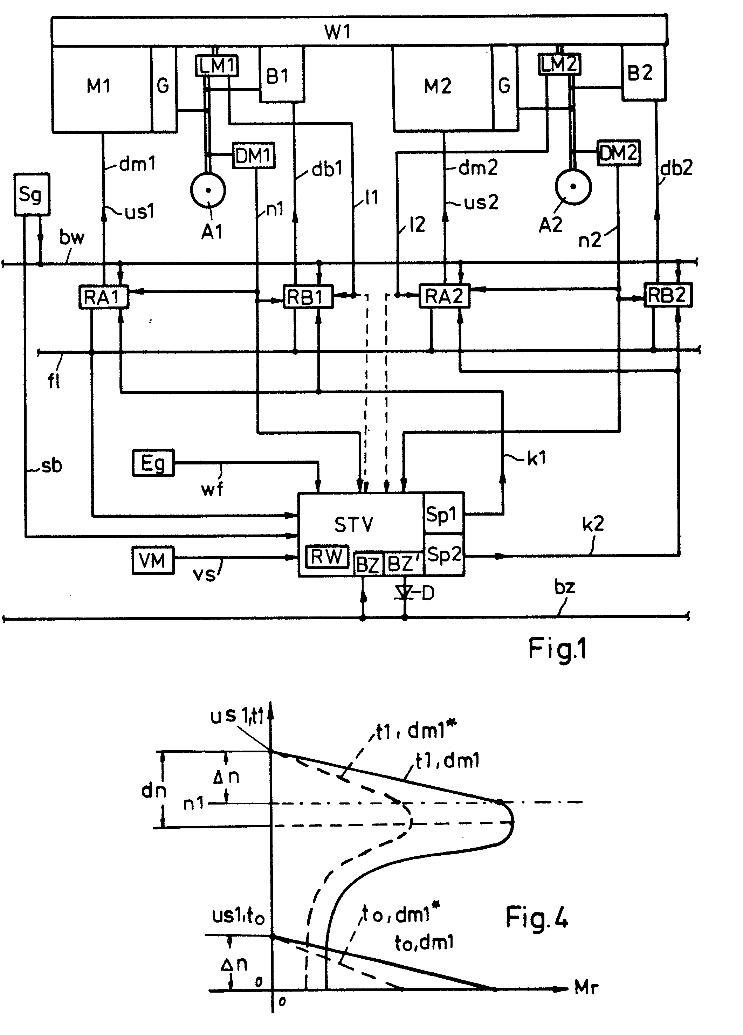

In den Fig. 1 bis 4 sind Vorrichtungen und Schaltungsanordnungen zur Durchführung des Verfahrens dargestellt. Die gezeigte Lösung ist beispielhaft. Es können die Antriebe, Regler, Messwertgeber auch äquivalente Vorrichtungen ersetzt werden. Zum Beispiel Drehzahl- und Drehzeitmesser bei Invertierung der Messwerte gleichermassen benutzt werden. Ebenso kann ein Geschwindigkeitsmesser durch einen Zeitmesser für feste Wegabschnitte ersetzt werden. Ausserdem können die Antriebe zum Beschleunigen und Bremsen getrennt sein, oder beide Funktionen werden von einem umsteuerbaren Antrieb übernommen.

Die Verknüpfung der Einflussfaktoren und des Sollwertes kann in den Regelvorrichtungen oder direkt in der Steuervorrichtung erfolgen. Die Steuervorrichtung kann für ein Fahrzeug oder einen ganzen Zug zentral angeordnet oder aber zweckmässig auf einzelne Wagen oder Antriebe aufgeteilt angeordnet sein, wobei die Koordination der Teilsteuerwerke über eine Busleitung für den zentral vorgegebenen Sollwert, für den drehmomentfreien Zustand und für den Bezugswert erfolgt.

Fig. 1 zeigt ein Blockdiagramm für zwei Achsantriebe

Fig. 2 zeigt ein Schaltbild einer Antriebssteuerung

Fig. 3 zeigt ein Schaltbild eines Antriebsreglers

Fig. 3a zeigt ein Schaltbild einer alternativen Erzeugung der Drehmomentvorgabe

Fig. 4 zeigt ein Drehmomentendiagramm.

In Fig. 1 ist schematisch ein Fahrzeug W1 mit zwei getrennt antreibbaren und bremsbaren Achsen A1, A2 dargestellt. Mehrere Fahrzeuge können zu einem Zug zusammengekoppelt sein, wobei der notwendige Signal- bzw. Informationsaustausch über durchlaufende Busleitungen erfolgt.

Die Antriebs-, Brems- und Regel/Steuereinrichtungen der beiden Achsen A1,A2 sind jeweils mit dem Index 1 bzw. 2 gekennzeichnet und gleichartig aufgebaut. An jeder Achse A1,2 ist ein Drehstrom-Antriebsmotor M1,2 mit Getriebe G und eine Bremse B1,2 vorgesehen. Der Antriebsmotor bzw. die Bremse wird jeweils von einer Steuer- oder Regelanordnung RA1,2 bzw. RB1,2 angesteuert, in der die Verknüpfung des vorgegebenen Beschleunigungswertes bzw mit dem entsprechenden Korrekturfaktor k1,2, der durch die Drehzahlverhältnisse bestimmt ist und in der Steuervorrichtung STV in dem Speicher Sp1,2 abgestellt ist, vorgenommen wird.

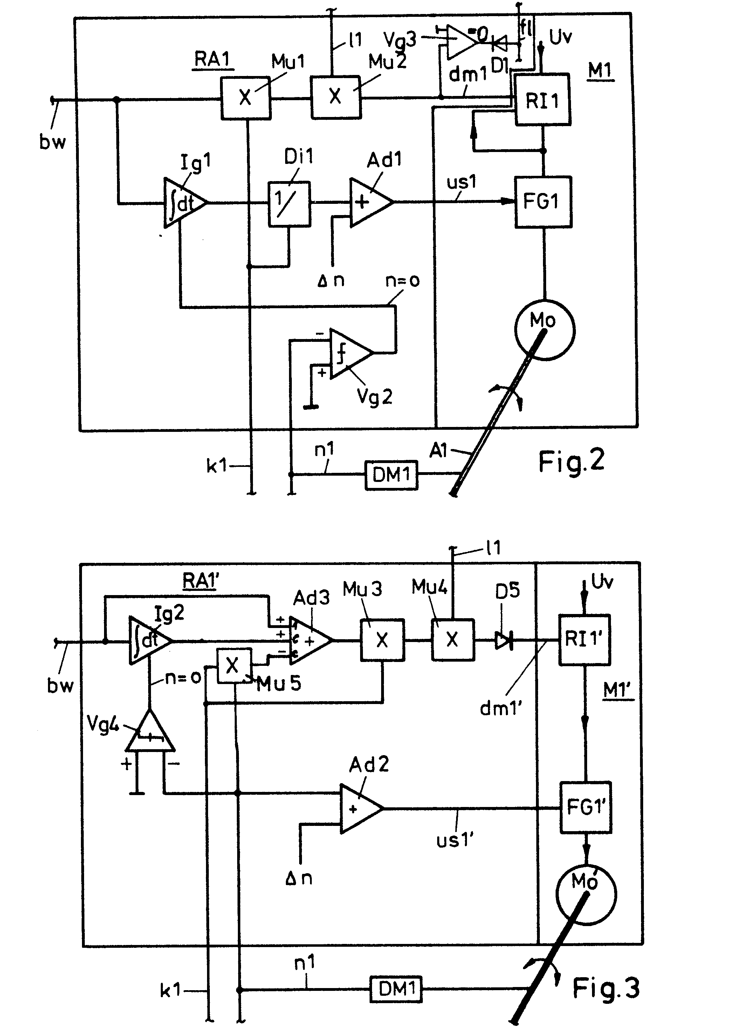

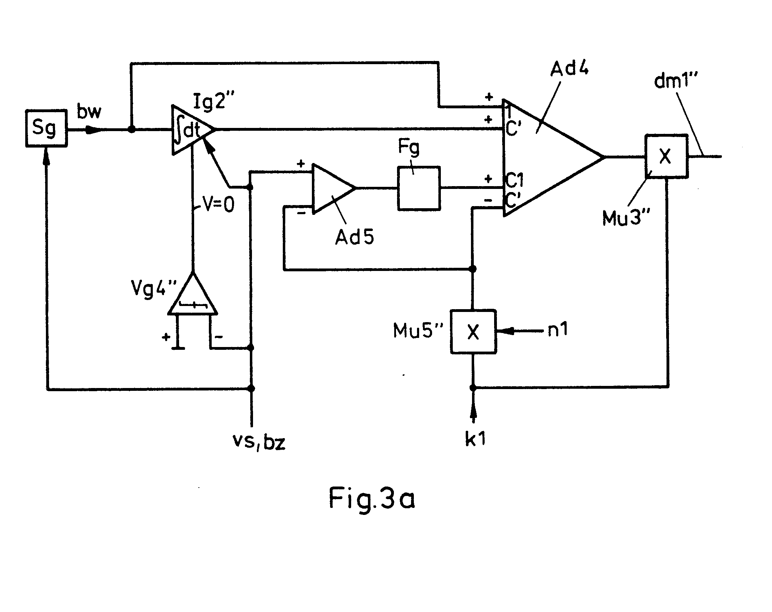

Die aufgrund der Verknüpfungen erzeugten Signale dm1,db1 sind die Vorgaben für die Antriebs- bzw. Bremsdrehmomente, und das Signal us1 ist die Vorgabe für die Frequenz des Frequenzgenerators FG1. Einzelheiten dazu finden sich in Fig. 2 und 3.

An jeder Achse A1,2 ist ein Drehzahlmesser DM1,2, dessen Messsignal n1,2 eingangsseitig in die Steuervorrichtung geführt ist. Zwischen dem Fahrzeugchassis und der Achse befindet sich jeweils ein Lastmesser LM1,2 dessen Messsignal l1,2 in die Regler RA1,2; RB1,2 oder in die Steuervorrichtung STV (gestrichelt gezeichnet) geführt ist. Soweit die Messsignale analog angeboten werden, befindet sich am Eingang der Steuervorrichtung in bekannter Weise ein Messmultiplexer mit nachgeschaltetem Analog-/Digitalwandler. Sofern die Drehzahl über Impulszählungen ermittelt wird und die Last durch Personenzählvorrichtungen errechnet wird, können die digitalen Signale dieser Messvorrichtungen direkt von der Steuervorrichtung STV übernommen werden.

An dem Leitstand des Zuges befindet sich ein Sollwertgeber Sg, an dem der Beschleunigungswert bw für den ganzen Zug vorgegeben wird. Sofern ein Sollwertgeber betätigt ist, wird dies über das Signal ab an die Steuervorrichtung gegeben, aufgrund dessen dies den Bezugswert bz durch Auswertung der Geschwindigkeitsmessung des Geschwindigkeitsmessers VM ermittelt, speichert und auf der Busleitung an die übrigen Fahrzeuge des Zuges signalisiert. Auch das Geschwindigkeitssignal kann über den Eingangsmultiplexer geführt werden bzw, sofern es digital ist, direkt ausgewertet werden.

Weiterhin ist es vorgesehen, dass für den Fall, dass unterschiedliche Wagen zu einem Zug zusammengestellt werden, über eine Eingabe Eg ein Wagenfaktor wf, der einer Normierung dient, der Steuervorrichtung zugeführt wird. Die Steuervorrichtung STV enthält ein Rechenwerk RW, das das Verhältnis des Bezugswertes bz, der entweder in der Steuervorrichtung selbst ermittelt wurde oder von der Busleitung übernommen wurde, zu den gemessenen Drehzahlen n1,2 bildet, sobald sich der Zug im antriebslosen Zustand befindet, der auf einer Busleitung als Freilaufsignal fl durch Zusammenführung aller Antriebs- und Bremssignale aus den Reglern RA, RB gewonnen wird. Die gebildeten Verhältnisse werden ggf. mit einem Wagenfaktor wf verknüpft und in die Speicher Sp1,2 entsprechend abgestellt und dienen als Korrekturfaktor k1,k2.

Ist keine absolute Geschwindigkeitsmessung mit dem Geschwindigkeitsmesser VM vorgesehen, so erfolgt die Bildung des Bezugswertes durch über die Dioden D entkoppelte Zusammenführung aller jeweils höchsten Drehzahlwerte auf der Busleitung, wodurch sich der höchste Wert als Bezugswert bz auf dem Bus einstellt und eingangsseitig von der Steuervorrichtung übernommen wird. Ist keine Diode D vorgesehen, so bildet sich der Mittelwert aus, wenn die Treiber Stromquellen sind. Statt einer analogen Verknüpfung auf der Busleitung kann im Falle, dass Umdrehungszähler oder Drehzeitzähler eingesetzt sind, die längste bzw. kürzeste Zeit für eine Umdrehung zum Stoppen aller Zähler signalisiert werden, wodurch in allen Zählern direkt die Verhältnisse zu der Bezugsgrösse dargestellt sind. In den Figuren 2 und 3 sind Verknüpfungen der Korrekturfaktoren k1,2 mit den Steuer- oder Regelgrössen wegen der Anschaulichkeit in Analogrechnersymbolik dargestellt.

Selbstverständlich können die Verknüpfungen auch in dem Rechenwerk RW der Steuervorrichtung oder in digitalen Schaltkreisen vorgenommen werden. Ebenso ist es möglich, die Regelvorrichtung in bekannter Weise durch Integral- und Differentialstufen zu ergänzen.

Sofern der Antrieb auch zum Bremsen dient, wird die Steuerung in entsprechender Weise im Wechselstrombetrieb um einen negativen Drehfeldschlupf an denjenigen Stellen ergänzt, an denen beim Antrieb ein positiver Drehfeldschlupf vorgesehen ist.

In den Figuren sind die Bezugszeichen für die Signalbezeichnungen an den Verbindungen, die diese Signale führen, in Kleinbuchstaben angezeigt. In Fig. 3 sind gleichartige Baugruppen zu Fig. 2 mit einem Hochkomma bezeichnet.

Der Antriebsmotor M1 beinhaltet einen Drehstrommotor Mo, der von einem Frequenzgenerator FG1 mit einer Frequenz entsprechend dem Drehfeldfrequenzvorgabesignal us1 gespeist wird und dessen Strom über einen Stromregler RI1 entsprechend dem Drehmoment-Vorgabesignal dm1 eingeprägt wird.

In dem Antriebsregler RA1 wird der Beschleunigungssollwert bw mit dem Korrekturfaktor k1, der durch das Drehzahlverhältnis der angetriebenen Achse A1 bestimmt ist, im Multiplizierer Mu1 multipliziert, und das Ergebnis davon wird in dem Multiplizierer Mu2 mit dem Achslastsignal l1

nochmals multipliziert, so dass als Endergebnis das Drehmomentvorgabesignal dm1 entsteht, das um so grösser ist, je grösser der Radius der angetriebenen Räder und je grösser die Achslast ist.

Weiterhin wird aus dem vorgegebenen Beschleunigungssollwert bw durch Integration im Integrierer Ig1 eine zu erwartende Bezugsdrehzahl errechnet.

Diese wird in einem Dividierer Di1 durch den Korrekturfaktor k1 dividiert, so dass am Ausgang die zu erwartende Drehzahl der Achse A1 als Signal abgegeben wird. In dem Addierer Ad1 wird dazu ein Drehfeldschlupfsollwert $\Delta n$ addiert, der dem optimalen Drehfeldschlupf des Drehfeldes entspricht, was anhand von Fig. 4 später erläutert sind. Somit entsteht am Ausgang des Addierers das Drehfeldfrequenzvorgabesignal us1 für den Frequenzgenerator mit jeweils optimaler Drehzahl. Der Integrator wird jeweils normiert, sobald der Vergleicher Vg2 ermittelt, dass Stillstand, also die tatsächliche Drehzahl n = 0 vorhanden ist. Bei der Vorgabe einer Bremsung bzw. negativen Beschleunigung wird, z.B. durch eine Diode D5 (Fig. 3), der Regler stromlos gesteuert. Der angetriebene oder stromführende Zustand wird über den Vergleicher Vg3 aus dem Drehmomentvorgabesignal dm1 ermittelt und über die Entkopplungsdiode D1 auf die Busleitung als Signalanteil zur Bildung des Freilaufsignals fl gegeben.

Nur wenn alle Antriebe und Bremsen ohne Drehmomentvorgabe sind, ist das Freilaufsignal fl positiv oder aktiv und veranlasst einen Drehzahlmess- und -vergleichsvorgang.

Durch die dargestellte Schaltung ist ein Antrieb gewährleistet, der stets eine optimale Frequenz und ein optimales Drehmoment für jede einzelne Achse vorgibt, so dass eine maximale Beschleunigung ohne Gleiten und ohne unterschiedliche oder extreme Belastung oder Antriebszustände der Motoren gewährleistet ist. Für die Fälle, dass extreme Witterungsverhältnisse herrschen und bei einem zu hohen Beschleunigungssollwert die Räder auf der Fahrbahn im Stand durchdrehen, muss zweckmässig mit einem geringeren Beschleunigungssollwert, der zu einem geringeren Drehmoment führt, erneut angefahren werden. Sofern der Beginn der Integration des Beschleunigungssollwertes nicht von der Drehzahl n1 der Achse sondern von einem Geschwindigkeitsmesser bestimmt wird, so hat dieses den zusätzlichen Vorteil, dass das Drehfeld so lange mit einer Frequenz entsprechend dem Drehfeldschlupfsollwert $\Delta n$ langsam dreht, bis sich das Fahrzeug in Bewegung setzt. Ein extrem schnelles Durchdrehen der Räder und eine Beschädigung der Reifen und Schienen wird dadurch vermieden.

In Fig. 3 ist ein Drehmomentregler in dem Antriebsregler RA1' enthalten. Die Drehfeldfrequenzvorgabe us1' wird in dieser Schaltung jeweils um die Drehfeldschlupfsollgrösse $\Delta n$ optimal gegen die tatsächliche, gemessene Achsdrehzahl n1 durch Addition der beiden Grössen im Addierer Ad2 errechnet und dem Frequenzgeber eingespeist.

Die durch Multiplikation mit den Faktoren k1 und l1 in den Multiplizierern Mu3, Mu4 korrigierte Drehmomentvorgabe dm1' setzt sich hingegen additiv aus zwei Anteilen zusammen, wobei der eine sich wieder aus dem Beschleunigungswert bw ergibt und der zweite aus der Differenz der Solldrehzahl, die sich durch die Integration des Beschleunigungssollwertes bw ergibt, und der um den Korrekturfaktor k1 korrigierten Istdrehzahl n1. Die Differenzbildung und Addition der Anteile erfolgt im Addierer Ad3, wobei die Eingänge unterschiedliche Gewichte haben entsprechend den gewünschten Anteilsfaktoren c bzw. 1 für die Differenz bzw. den vorgegebenen Beschleunigungssollwert bw.

Bei Vorlauf einer Achse wird somit das Drehmoment verringert und umgekehrt. Bei geeigneter Dimensionierung der Verhältnisse wird somit bei auftretendem Gleiten das Drehmoment so weit verringert, dass ein erneutes Greifen der Räder erfolgt, und bei Berg- o. Talfahrt wird die Beschleunigungsvorgabe erhöht bzw. erniedrigt. Ausserdem wird durch den ständigen Vergleich der theoretischen Drehzahl mit der gemessenen Drehzahl und die daraus resultierende Korrektur des Drehmomentes die Einhaltung des Fahrplanes erzwungen.

Statt der durch Integration aus dem Beschleunigungssollwert bw ermittelten theoretischen Drehzahl kann dem Addierer Ad3 das Geschwindigkeitssignal vs der tatsächlichen Geschwindigkeit zugeführt werden, wodurch ein Durchdrehen der Räder bei der Differenzbildung mit der gemessenen Drehzahl direkt ermittelt wird; eine Einhaltung der gewünschten Reisegeschwindigkeit bzw. Beschleunigung wird dann aber nicht durch die Regelung bewirkt.

Eine kompromisslose Regelung bezüglich der Einhaltung der vorgegebenen Geschwindigkeit bzw. Sollbeschleunigung und dem Vermeiden eines Gleitzustandes wird, wie in Fig. 3a gezeigt, durch eine getrennte Differenzbildung der gemessenen Drehzahl n1 multipliziert mit dem Korrekturfaktor k1 und der theoretischen Drehzahl bzw. dem Geschwindigkeitssignal vs erreicht, wobei dem Signal, das den Gleitzustand anzeigt, ein Gewicht c1 gegeben wird und eine Zeitfunktion Fg zweckmässig aufgeprägt wird, die ein Greifen der Räder schnell ermöglicht. Sofern ein Gleiten der Räder im Stillstand erfolgt, wird dies über den Vergleicher Vg4'' festgestellt und die Integration noch nicht freigegeben. Dadurch wird ein sofortiges Auftreten des Korrektursignales zur Steigerung der Beschleunigung über das vorgegebene Mass verhindert, da dadurch ansonsten ein erneutes Gleiten bewirkt werden könnte.

In Fig. 4 sind Drehmoment-/Drehzahlkurven eines Drehstrommotores gezeigt. Bei vorgegebener Bestromung bzw. vorgegebenem Drehmoment dm1 ergibt sich ein maximales Drehmoment, wenn das Drehfeld um einen bestimmten Winkel zum induzierten Feld im Anker versetzt ist. Da das induzierte Feld sich entsprechend der aus Induktivität und Widerstand ergebenden Zeitkonstanten verändert, ergibt sich das maximale Moment jeweils bei einem Voreilen des Drehfeldes um einen bestimmten Drehfeldschlupf dn. Aus Stabilitätsgründen wird eine etwas geringere Drehfeldschlupfsollgrösse $\pm\Delta n$ für die Bestimmung der Drehfeldfrequenzvorgabe us1 gewählt.

Es sind die Drehmoment/Drehzahlkurven für zwei Zeitpunkte t0 und t1 entsprechend den Indizes dargestellt. Wie zu ersehen ist, verschiebt sich die Kurve vertikal, wenn sich die Frequenz des Drehfeldes zum Beispiel beim Anfahren des Fahrzeuges ändert.

Weiterhin sind jeweils ausgezogen Kurven gezeigt für ein vorgegebenes Drehmoment dm1 und gestrichelt Kurven für ein zum Beispiel durch einen Regelvorgang verändertes vorgegebenes Drehmoment dm1 dargestellt. Das jeweils wirksame Drehmoment Mr ist somit durch die jeweilige Drehzahl n1, die Drehfeldfrequenzvorgabe us1 das ist die Frequenz des Drehfeldes, und das vorgegebene Drehmoment zum Beispiel dm1 bzw. dm1* usw. bestimmt. Bei fest vorgegebenem Drehfeldschlupfsollwert $\pm\Delta n$ erfolgt die Regelung zu einem bestimmten Zeitpunkt t1 entlang der strichpunktierten Linie.

Sofern der Motor auch zum Bremsen verwandt wird, wird die Frequenz des Feldes um die entsprechende Grösse unter die Anker bzw. Achsdrehzahl abgesenkt. Den Addierern Ad1 bzw. Ad2 wird dann deshalb ein Drehfeldschlupfsoll-Signal $-\Delta n$ zugeführt.

Die gesamten Rechenfunktionen in den Antriebs- und Bremsreglern einer Achse lassen sich, da sie weitgehend gleichlaufend sind, auch in einer Anordnung durchführen, deren Ausgangssignale entsprechend verzweigt werden, wenn eine getrennte Bremse vorhanden ist.

Der Sollwertgeber Sg, der den Beschleunigungssollwert vorgibt, ist vorteilhaft als Fahrtoptimierungsrechner ausgeführt. Er errechnet aufgrund der Fahrplan- und Streckendaten, der jeweiligen Uhrzeit und des jeweiligen Ortes, an dem sich das Fahrzeug befindet, laufend die Soll-Beschleunigung bzw. -Verzögerung bw, wobei diese zur Erreichung eines minimalen Energieverbrauches beim Anfahren und Bremsen im Rahmen der vorgegebenen Grenzen möglichst gross gewählt wird.

Die Integrierer Ig 1,2,2″ arbeiten zweckmässig unter Berücksichtigung des Fahrwiderstandes in Abhängigkeit von der Geschwindigkeit. Hierzu wird zweckmässig dem Integrierer Ig2″ das Geschwindigkeitssignal vs zugeführt und dort entsprechend ausgewertet.

Die verschiedenen Funktionsgruppen zur Erzeugung der Drehmomentvorgabe und der Drehzahlvorgabe in den Fig. 2, 3, 3a können unterschiedlich kombiniert werden, was im Rahmen der Erfindung liegt. Die dargestellten Kombinationen sind besonders vorteilhaft.

Es ist eine vorteilhafte Ausgestaltung der Vorrichtung, wenn die Messung der Drehzahl n1,2 im antriebslosen Zustand aus den Signalen im Stator des Motors Mo, die aufgrund des remanenten Magnetfeldes des Ankers induziert werden, erfolgt. Ein Drehzahlmesser ist somit entbehrlich, sofern eine Steuerung ohne Bezugnahme auf die Drehzahlen n1,2 im angetriebenen Zustand erfolgt. Im angetriebenen Zustand kann weiterhin die Drehzahl n1,2 indirekt aus der induzierten Spannung am Anker oder Stator des Drehstrommotors Mo bestimmt werden; was einen getrennten Drehzahlmesser erübrigt.

### Patentansprüche

1. Verfahren zur Drehmomentsteuerung für Achsen (A1, A2) von Schienentriebfahrzeugen (W1), insbesondere Schienenfahrzeugzügen, mit mehreren Achsen oder Achsgruppen (A1, A2), die jeweils mit gesonderten, Asynchronmotoren aufweisenden Antriebseinrichtungen (M1, G; M2, G; B1, B2) verbunden sind, wobei im antriebs- und bremsungsfreien Fahrzustand die Achsdrehzahlen (n1, n2) gemessen werden und aus dem Verhältnis eines die Fahrzeuggeschwindigkeit repräsentierenden Bezugswertes (bz) zur Achsdrehzahl (n1, n2) ein Korrekturfaktor (k1) für die laufend gemessenen Drehzahlen gebildet und, zwecks entsprechender Berücksichtigung bei einer Drehmomentsteuerung im Antriebs- oder Bremszustand, gespeichert wird, wobei die Drehmomentsteuerung unter Vorgabe eines Drehfeldschlupf-Sollwertes ($\pm\Delta n$) erfolgt, gekennzeichnet durch Anwendung bei der Kopplung mehrerer Triebfahrzeuge (W1) zu Triebfahrzeugzügen, wobei für jeden gesonderten Antrieb (M1, B1; M2, B2) unter Verwendung eines allen Triebfahrzeugen gemeinsamen Geschwindigkeits-Bezugswertes (bz) ein gesonderter Drehzahl-Korrekturfaktor (k1, k2) ermittelt wird sowie eine eigene Drehmomentsteuerung in der Weise zugeordnet ist, dass die Antriebs- bzw. Bremskräfte an allen Radumfängen unabhängig von den Raddurchmessern gleich sind oder alle Räder bei gleicher Haftwertinanspruchnahme betrieben werden.

2. Verfahren nach Anspruch 1, dadurch gekennzeichnet, dass der Bezugswert (bz) aus den im antriebslosen und bremsfreien Zustand gemessenen Drehzahlen (n1, n2) oder durch eine unabhängige Messung der Geschwindigkeit (vs) des Schienentriebfahrzeuges (W1) bestimmt wird.

3. Verfahren nach einem der vorhergehenden Ansprüche, dadurch gekennzeichnet, dass die Drehmomentvorgaben (dm1, dm2) aus einem auf die jeweiligen Achsen (A1, A2) entfallenden Achslastwert multipliziert mit einem jeweils vorgegebenen Beschleunigungssollwert (bw) jeweils multipliziert mit dem zugehörigen Korrekturfaktor (k1, k2) laufend gebildet werden.

4. Verfahren nach einem der vorhergehenden Ansprüche, dadurch gekennzeichnet, dass die Drehfeldfrequenzvorgaben (us1, us2) Frequenzgeneratoren (FG1, FG2) beaufschlagen, die jeweils die Asynchronmotoren (M1, M2) speisen, wobei ein zeitliches Integral des Beschleunigungs-Sollwertes (bw) gebildet wird, das jeweils dividiert durch den Korrekturfaktor (k1, k2) und erhöht bzw. erniedrigt um den vorgegebenen Drehfeldschlupfsollwert ($\pm\Delta n$) die jeweiligen Drehfeldfrequenzvorgaben (us1, us2) ergibt.

5. Verfahren nach Anspruch 2, dadurch gekennzeichnet, dass die Drehmomentvorgabe (Fig 3: dm1') jeweils gebildet wird durch das Produkt aus einer zugeordneten Achslast (l1), dem zugehörigen Korrekturfaktor (k1) und einer Summe, die ihrerseits gebildet wird aus einem Beschleunigungs-Sollwert (bw) und einer mit einem Gewichtsfaktor (c) gewichteten Differenz aus einem zeitlichen Integral des Beschleunigungssollwertes (bw) und dem Produkt aus der jeweils gemessenen Drehzahl (n1) mit dem Korrekturfaktor (k1).

6. Verfahren nach Anspruch 1, dadurch gekennzeichnet, dass jeweils die gemessene Drehzahl (n1, n2) erhöht um den Drehfeldschlupfsollwert ($\pm\Delta n$) als die Drehfeldfrequenzvorgabe (us1, us2) einem entsprechenden Frequenzgenerator (FG1, FG2) zur Speisung des als Asynchronmotor ausgebildeten Antriebes (M1, M2) zugeführt wird (Fig. 2: Addierer Ad2).

7. Verfahren nach Anspruch 2, dadurch gekennzeichnet, dass die Drehmomentvorgabe (Fig. 3a: dm1'') gebildet wird durch das Produkt aus einer zugeordneten Achslast (l1), dem Korrekturfaktor (k1) und einer Summe, die ihrerseits gebildet ist aus einem Beschleunigungssollwert (bw) und der mit einem ersten Gewichtsfaktor (c') gewichteten Differenz aus dem zeitlichen Integral des Beschleunigungssollwertes (bw) und dem Produkt aus der jeweilig gemessenen Drehzahl (n1) mit dem Korrekturfaktor (k1), und aus der mit einem zweiten Gewichtsfaktor (c1) und einer Zeitfunktion (Fg) gewichteten Differenz der Geschwindigkeit (vs) und dem Produkt aus der Drehzahl (n1) erhöht um den vorgegebenen Drehfeldschlupfsollwert ($\pm\Delta n$) zur Steuerung von Frequenzgeneratoren (FG1, FG2) dienen, die jeweils die als Asynchronmotoren ausgebildeten Antriebe (M1, M2) speisen.

8. Verfahren nach Anspruch 5 oder 7, dadurch gekennzeichnet, dass die Integration des Beschleunigungssollwertes (bw) jeweils beginnt, wenn die Drehzahl (n1) oder die Geschwindigkeit (vs) sich von Null auf einen endlichen Wert ändert und dass die Integration als Simulation des Fahrverhaltens des Fahrzeuges unter Berücksichtigung des geschwindigkeitsabhängigen Fahrwiderstandes durchgeführt wird.

9. Verfahren nach einem der Ansprüche 5 bis 8, dadurch gekennzeichnet, dass der jeweilige Beschleunigungssollwert (bw) durch eine uhrzeit- und fahrplangesteuerte Zeitzielberechnung unter Minimierung des Energiebedarfs durch Ausnutzung maximal zulässiger Beschleunigung und Verzögerung bestimmt wird.

10. Verfahren nach einem der Ansprüche 3 bis 9, dadurch gekennzeichnet, dass die jeweilige Achslast (l1) gemessen oder aus einer Zählung der Passagiere errechnet wird.

11. Schienentriebfahrzeug, insbesondere Schienenfahrzeugzug, mit mehreren Achsen oder Achsgruppen (A1, A2) mit je einer gesonderten, einen Asynchronmotor aufweisenden Antriebsvorrichtung (M1, B1; M2, B2), und mit an allen Achsen bzw. Achsgruppen (A1, A2) angeordneten Drehzahlmessern (DM1, DM2), deren Signalleitungen mit einer Steuervorrichtung (STV) eingangsseitig verbunden sind, die im antriebs- und bremsungsfreien Fahrzustand ein Verhältnis der jeweils gemessenen Drehzahlen (n1, n2) zu einem die Fahrzeuggeschwindigkeit repräsentierenden Bezugswert (bz) als einen Korrekturfaktor (k1) errechnet und in einem Speicher (Sp1) speichert, und die ausgangsseitig unter Berücksichtigung der Drehzahlen (n1, n2) und des Korrekturfaktors (k1) ein Drehmomentsteuersignal unter Vorgabe eines Drehfeldschlupfsollwertes ($\pm\Delta n$) an die Antriebsvorrichtungen (M1, B1; M2, B2) gibt, dadurch gekennzeichnet, dass das Schienentriebfahrzeug mit anderen Schienentriebfahrzeugen (W1) zu Schienenfahrzeugzügen koppelbar ist, wobei jede der Antriebsvorrichtungen (M1, B1; M2, B2) eine eigene zugehörige Regeleinrichtung (RA1, RB1; RA2, RB2) hat und die Steuervorrichtung (STV) aus jeder der gemessenen Drehzahlen (n1, n2) unter Berücksichtigung des allen Triebfahrzeugen (W1) gemeinsamen Geschwindigkeits-Bezugswertes (bz) je eine Korrekturgrösse (k1, k2) errechnet und speichert und aus den laufend gemessenen Drehzahlen (n1, n2) und den entsprechenden Korrekturgrössen (k1, k2) jeder entsprechenden Regeleinrichtung (RA1, RB1; RA2, RB2) jeweils als das Drehmomentsteuersignal eine Drehmomentvorgabe (dm1, dm2; db1, db2) derart vorgibt, dass die Antriebs- bzw. Bremskräfte an allen Radumfängen, unabhängig von den Raddurchmessern, gleich sind oder alle Räder bei gleicher Haftwertinanspruchnahme betrieben werden.

12. Schienenfahrzeugzug nach Anspruch 11, dadurch gekennzeichnet, dass dessen Schienentriebfahrzeuge (W1) durch eine Busleitung untereinander verbunden sind, an der die Steuervorrichtung (STV) und die Regeleinrichtungen (RA1, RA2; RB1, RB2) angeschlossen sind und über die diese untereinander einen Beschleunigungssollwert (bw), ein Freilaufsignal (fl) und den Bezugswert (bz) übermitteln, wobei ein Zielzeitrechner als Sollwertgeber (Sg) für den Beschleunigungssollwert (bw) dient und das Freilaufsignal (fl) sich durch eine verdrahtete ODER-Schaltung auf der Busleitung aus den Drehmomentvorgabesignalen (dm1, dm2; db1, db2) ergibt und das Bezugssignal (bz) durch eine Überlagerung oder Parallelschaltung der Drehzahlsignale (n1, n2) auf der Busleitung aus dem minimalen, maximalen bzw. mittleren Drehzahlwert der Drehzahlwerte (n1, n2) gebildet wird oder das Bezugssignal (bz) als ein Geschwindigkeitssignal (vs) von einem Geschwindigkeitsmesser (VM) dort eingespeist wird.

13. Schienenfahrzeugzug oder Schienentriebfahrzeug nach Anspruch 11 oder 12, dadurch gekennzeichnet, dass der Beschleunigungssollwert (bw) und der Korrekturfaktor (k1) eingangsseitig einem ersten Multiplizierer (Mu1, Mu3, Mu3'') zugeführt werden und das darin gebildete Produkt einem zweiten Multiplizierer (Mu2, Mu4), dessen zweiter Eingang jeweils mit einem zugehörigen Achslastmessgerät (LM1, LM2) oder einer Personenzähleinrichtung verbunden ist, zugeführt wird und der zweite Multiplizierer (Mu2, Mu4) das Drehmomentvorgabesignal (dm1, dm1') einem in der Regeleinrichtung (RA1, RA2) enthaltenen Drehmomentregler (RI1, RI1') zuführt, der als Strom- Spannungs- oder Phasenanschnittregler mit Drehmomentcharakteristik ausgebildet ist.

14. Schienenfahrzeugzug oder Schienentriebfahrzeug nach Anspruch 13, dadurch gekennzeichnet, dass dem ersten Multiplizierer (Mu1, Mu3, Mu3'') ausser dem Beschleunigungswert (bw) über einen ersten Addierer (Ad3, Ad4) mit einem ersten Gewichtsfaktor (c, c') die Differenz aus dem über einen Integrierer (Ig2, Ig2'') geführten Beschleunigungssollwert (bw) und dem Ausgangssignal eines dritten Multiplizierers (Mu5, Mu5''), dessen Eingängen die jeweilige Drehzahl (n1) und der zugehörige Korrekturfaktor (k1) zugeführt wird, addiert wird oder dass über den ersten Addierer (Ad4) mit einem zweiten Gewichtsfaktor (c1) das Ausgangssignal eines zweiten Addierers (Ad5) das Geschwindigkeitssignal (vs) und subtraktiv das Ausgangssignal des dritten Multiplizierers (Mu5'') zugeführt wird.

15. Schienenfahrzeugzug oder Schienentriebfahrzeug nach einem der Ansprüche 11 bis 14, dadurch gekennzeichnet, dass der Beschleunigungssollwert (bw) einem Integrierer (IG1) zugeführt wird, dessen Ausgangssignal jeweils einem Dividierer (Di1) zugeführt wird, dem als Divisor der Korrekturfaktor (k1) zugeführt wird und dessen Ausgangssignal einem Dritten Addierer (Ad1) zugeführt wird, dem der Drehfeldschlupfsollwert ($\pm\Delta n$), der so bemessen ist, dass sich ein optimales Drehmoment ergibt, am zweiten Eingang zugeführt wird und dessen Ausgangssignal als die Frequenzvorgabe (us1) jeweils einem Frequenzgenerator (FG1), der den Antriebsmotor (Mo) speist, zugeführt wird.

16. Schienenfahrzeugzug oder Schienentriebfahrzeug nach Anspruch 14 oder 15, dadurch gekennzeichnet, dass der Integrierer (Ig1, Ig2, Ig2'') geschwindigkeitsabhängig, dem Fahrverhalten des Fahrzeuges entsprechend, integriert.

17. Schienenfahrzeugzug oder Schienentriebfahrzeug nach einem der Ansprüche 11 bis 16, dadurch gekennzeichnet, dass einem vierten Addierer (Ad2) die Drehzahl (n1) und der Drehfeldschlupfsollwert ($\pm\Delta n$), der so bemessen ist, dass er ein optimales Drehmoment ergibt, eingangsseitig zugeführt werden und dessen Ausgangssignal dem Frequenzgenerator (FG1) zugeführt wird.

18. Schienenfahrzeugzug oder Schienentriebfahrzeug nach einem der Ansprüche 11 bis 17, dadurch gekennzeichnet, dass die Drehzahlen (n1, n2) aus im antriebslosen Zustand durch Remanenzfelder in den Motoren (Mo) der Antriebe (M1, M2) jeweils induzierte Signale gewonnen werden und vorzugsweise die Drehzahlen (n1, n2) im angetriebenen bzw. gebremsten Zustand aus in den Motoren (Mo) induzierten Spannungen bestimmt werden.

**Claims**

1. A torque controlling process for axles (A1, A2) of rail traction units (W1), especially rail vehicle trains, with several axles or axle groups (A1, A2), which are each connected with separate drive apparatuses (M1, G; M2, G; B1, B2) comprising asynchronous motors, the rotational speeds (n1, n2) of the axles being measured in the non-driving and non-braking travel mode and a correction factor (k1) for the constantly measured rotational speeds being generated from the ratio of a reference value (bz) representative of the vehicle speed to the rotational speed (n1, n2) of the axle and stored for appropriate consideration in torque control in the driving or braking mode, torque control being effected with predetermination of a desired rotating field slip value ($\pm\Delta n$), characterized by use in the coupling of several traction units (W1) into traction unit trains, a separate rotational speed correction factor (k1, k2) being determined for each separate drive (M1, B1; M2, B2) with the use of one velocity reference value (bz) common to all traction units and individual torque control being so allocated that the drive or braking forces are equal on all wheel circumferences irrespective of the wheel diameters or all wheels are operated with equal utilization of the coefficient of adhesion.

2. A process according to claim 1, characterized in that the reference value (bz) is determined from the rotational speeds (n1, n2) measured in the non-driving and non-braking mode or by an independent measurement of the velocity (vs) of the rail traction unit (W1).

3. A process according to either one of the preceding claims, characterized in that the predetermined torque values (dm1, dm2) are constantly generated from an axle load value falling on the respective axles (A1, A2) multiplied together with a predetermined desired acceleration value (bw) multiplied together with the associated correction factor (k1, k2).

4. A process according to any one of the preceding claims, characterized in that the predetermined rotary field frequency values (us1, us2) act on frequency generators (FG1, FG2), which each supply the asynchronous motors (M1, M2), a time integral of the desired acceleration value (bw) being generated which, divided by the correction factor (k1, k2) and increased or diminished by the predetermined desired rotating field slip value ($\pm\Delta n$), yields the respective predetermined rotating field frequency values (us1, us2).

5. A process according to claim 2, characterized in that the predetermined torque value (Fig. 3: dm1') is generated by the product of an associated axle load (l1), the associated correction factor (k1) and a sum, which is itself generated from a desired acceleration value (bw) and a difference, weighted with a weight factor (c), of a time integral of the acceleration control value (bw) and the product of the measured rotational speed (n1) with the correction factor (k1).

6. A process according to claim 1, characterized in that the measured rotational speed (n1, n2), increased by the desired rotating field slip value (n), is supplied as the predetermined rotating field frequency value (us1, us2) to an appropriate frequency generator (FG1, FG2) for feeding the drive (M1, M2) contructed as an asynchronous motor (Fig. 2 = Adder Ad2).

7. A process according to claim 2, characterized in that the predetermined torque value (Fig. 3a: dm1") is generated by the product of an associated axle load (l1), the correction factor (k1) and a sum which is itself generated from a desired acceleration value (bw) and the difference, weighted with a first weight factor (c'), of the time integral of the desired acceleration value (bw) and the product of the respectively measured rotational speed (n1) with the correction factor (k1), and from the difference, weighted with a second weight factor (c1) and a time function (Fg), of the speed (vs) and the product from the rotational speed (n1) increased by the desired predetermined rotating field slip value ($\pm\Delta n$), for the control of frequency generators (FG1, FG2), which each supply the drives (M1, M2) constructed as asynchronous motors.

8. A process according to claim 5 or claim 7, characterized in that the integration of the desired acceleration value (bw) begins when the rotational speed (n1) or the speed (vs) changes from zero to a finite value and in that the integration is effected as simulation of the travel behaviour of the vehicle taking into consideration the speed-dependent resistance to forward motion.

9. A process according to any one of claims 5 to 8, characterized in that the respective desired acceleration value (bw) is determined by a time- and schedule-controlled time target calculation, with minimization of the energy requirement by exploitation of the maximum acceleration and deceleration allowed.

10. A process according to any one of claims 3 to 9, characterized in that the respective axle load (l1) is measured or calculated from counting the passengers.

11. A rail traction unit, especially a rail vehicle train, with several axles or axle groups (A1, A2) each with a separate drive device (M1, B1; M2, B2) comprising an asynchronous motor, and with rotational speed meters (DM1, DM2) arranged on all the axles or axle groups (A1, A2), the signal lines of said meters being connected on the input side with a control device (STV) which calculates, in the non-driving and non-braking mode, a ratio of each measured rotational speed (n1, n2) to a reference value (bz) representative of the vehicle velocity ans a correction factor (k1) and stores it in a memory (Sp1), and which, on the output side, taking into consideration the rotational speeds (n1, n2) and the correction factor (k1), delivers a torque control signal to the drive devices (M1, B1; M2, B2) with predetermination of a desired rotating field slip value ($\pm\Delta n$), characterized in that the rail vehicle can be coupled with other rail traction units (W1) into rail vehicle trains, each of the drive devices (M1, B1; M2, B2) having their own regulating device (RA1, RB1; RA2, RB2) associated with it and the control device (STV) calculating and storing a correction value (k1, k2) from each of the measured rotational speeds (n1, n2) taking into account the velocity reference value (bz) common to all the traction units (W1) and determining from the constantly measured rotational speeds (n1, n2) and the corresponding correction values (k1, k2) of each corresponding regulating device (RA1, RB1; RA2, RB2) a predetermined torque value (dm1, dm2; db1, db2) as the torque control signal in such a way that the drive or braking forces are equal at all wheel circumferences, irrespective of wheel diameters, or all wheels are operated with equal utilization of coefficients of adhesion.

12. A rail vehicle train according to claim 11, characterized in that its rail traction units (W1) are connected to each other by a bus line, to which the control device (STV) and the regulating devices (RA1, RA2; RB1, RB2) are connected and via which these transmit to each other a desired acceleration value (bw), a free-running signal (f1) and the reference value (bz), a time target computer serving as control value setter (Sg) for the desired acceleration value (bw) and the free-running signal (f1) resulting from the predetermined torque signals (dm1, dm2; db1, db2) through a wired OR-circuit on the bus line and the reference signal (bz) being generated by the superposition or parallel connection of the rotational speed signals (n1, n2) on the bus line from the minimum, maximum or average rotational speed value of the rotational speed values (n1, n2) or the reference signal (bz) being supplied at that point as a velocity signal (vs) by a velocity meter (VM).

13. A rail vehicle train or rail traction unit according to claim 11 or claim 12, characterized in that the desired acceleration value (bw) and the correction factor (k1) are supplied on the input side to a first multiplier (Mu1, Mu3, Mu3") and the product generated therein is supplied to a second multiplier (Mu2), Mu4), whose second input is connected with an associated axle load measuring implement (LM1, LM2) or a person counting device, and the second multiplier (Mu2, Mu4) supplies the predetermined torque signal (dm1, dm1') to a torque regulator (RI1, RI1') contained in the regulating device (RA1, RA2), which torque regulator (RI1, RI1') is constructed as a current, voltage or phase-shift regulator with torque characteristic.

14. A rail vehicle train or rail traction unit according to claim 13, characterized in that to the first multiplier (Mu1, Mu3, Mu3") in addition to the acceleration value (bw) there is added via a first adder (Ad3, Ad4) with a first weight factor (c, c') the difference of the desired acceleration value (bw) carried via an integrator (Ig2, Ig2") and the output signal of a third multiplier (Mu5, Mu5"), to whose inputs are supplied the respective rotational speed (n1) and the associated correction factor (k1), or in that via the first adder (Ad4) with a second weight factor (c1) there are supplied the output signal of a second adder (Ad5), the velocity signal (vs) and subtractionally the output signal or the third multiplier (Mu5").

15. A rail vehicle train or rail traction unit according to any one of claims 11 to 14, characterized in that the desired acceleration value (bw) is supplied to an integrator (IG1), the output signal of which is supplied to a divider (Di1), to which the correction factor (k1) is supplied as a divisor and whose output signal is supplied to a third adder (Ad1), to which the desired rotating field slip value ($\pm \Delta$n), which is so measured that an optimum torque results, is supplied to the second input and whose output signal is supplied as the predetermined frequency value (us1) to a frequency generator (FG1), which supplies the drive motor (Mo).

16. A rail vehicle train or rail traction unit according to claim 14 or claim 15, characterized in that the integrator (Ig1, Ig2, Ig2″) integrates in dependence on the velocity, in accordance with the travel behaviour of the vehicle.

17. A railway vehicle train or rail traction unit according to any one of claims 11 to 16, characterized in that the rotational speed (n1) and the desired rotating field slip value ($\pm \Delta$n), which is so measured that it results in an optimum torque, are supplied to a fourth adder (Ad2) on the input side and whose output signal is supplied to the frequency generator.

18. A rail vehicle train or rail traction unit according to any one of claims 11 to 17, characterized in that the rotational speeds (n1, n2) are obtained from signals induced in the non-driving mode by residual fields in the motors (Mo) of the drives (M1, M2) and preferably the rotational speeds (n1, n2) are determined in the driven or braked mode from voltages induced in the motors (Mo).

**Revendications**

1. Procédé de commande des moments de rotation pour essieux (A1, A2) de véhicules automoteurs ferroviaires (W1), notamment de trains ferroviaires à plusieurs essieux ou groupes d'essieux (A1, A2), reliés respectivement à des dispositifs d'entraînement (M1, G; M2, G; B1, B2) séparés et présentant des moteurs asynchrones, les nombres de rotations (n1, n2) des essieux étant mesurés en marche exempte d'entraînement et de freinage, et un coefficient de correction (k1), pour les vitesses de rotation constamment mesurées, étant formé à partir du rapport existant entre une valeur de référence (bz), représentant la vitesse du véhicule, et le nombre de rotations des essieux (n1, n2), et enregistré en vue d'être pris en considération adéquatement pour une commande du moment de rotation à l'état d'entraînement et de freinage; ce faisant, la commande du moment de rotation se fait sur la base de l'allocation d'une valeur de consigne de glissement du champ rotatif ($\pm \Delta$n), ce procédé de commande étant caractérisé par le fait qu'il est applicable lors de la copulation de plusieurs véhicules automoteurs, un facteur de correction de vitesse de rotation (k1, k2) individuel étant recherché pour chaque entraînement (M1, B1; M2, B2) en recourant à une valeur de référence (bz) de vitesse commune à tous les véhicules automoteurs, et une propre commande du moment de rotation alloué, de sorte que les forces motrices ou les puissances de freinage soient les mêmes sur tous les pourtours de roues, indépendemment des diamètres de roues, ou que toutes les roues soient entraînées avec le même coefficient d'adhérence.

2. Procédé selon spécification 1, caractérisé par le fait que la valeur de référence (bz) est déterminée par les vitesses de rotation (n1, n2), mesurées à l'état exempt d'entraînement et de freinage, ou par un mesurage indépendant de la vitesse (vs) du véhicule automoteur sur rail (W1).

3. Procédé selon l'une des spécifications précédentes, caractérisé par le fait que les allocations de moments de rotation (dm1, dm2) sont formées continuellement à partir d'une valeur de charge d'essieux relative à chaque essieu respectif (A1, A2), multipliée par une valeur prescrite, prédéterminée d'accélération (bw), multipliée, elle-même, respectivement par le facteur de correction correspondant (k1, k2).

4. Procèdé selon l'une des spécifications précédentes, caractérisé par le fait que les allocations de fréquences cycliques (us1, us2) se rapportent aux générateurs de fréquences (FG1, FG2), alimentant respectivement des moteurs asynchrones (M1, M2), une intégrale temporelle des valeurs d'accélération prescrites (bw) étant formée, ce faisant, laquelle est divisée, respectivement, par le facteur de correction (k1, k2) et, augmentée ou réduite de la valeur prescrite du glissement du champ rotatif ($\pm \Delta$n), donne les allocations de fréquences cycliques respectives (us1, us2).

5. Procédé selon spécification 2, caractérisé par le fait que l'allocation du moment de rotation (fig. 3i) (dm1) est formée chaque fois par le produit d'une charge d'essieu (I1) correspondante, du facteur de correction y relatif (k1) et d'une somme, formée elle-même par la valeur de consigne d'accélération (bw) et d'une différence pondérée d'un facteur de poids (c), différence provenant d'une intégrale temporelle, de la valeur de consigne d'accélération (bw) et du produit du nombre de tours respectivement mesuré (n1) et du facteur de correction (k1).

6. Procédé selon spécification 1, caractérisé par le fait que chaque vitesse de rotation (n1, n2) mesurée, majorée de la valeur de consigne du glissement de champ rotatif ($\pm \Delta$n) est amené, en tant qu'allocation de fréquence du champ rotatif (us1, us2) à un générateur de fréquences correspondant (FG1, FG2) aux fins d'alimentation de l'entraînement conçu sous forme de moteur asynchrone (M1, M2) (fig. 2: additionneur ad2).

7. Procédé selon spécification 2, caractérisé par le fait que l'allocation du moment de rotation (fig. 3: dm1) et formée par le produit d'une charge d'essieu correspondante (I1), du facteur de correction (k1) et d'une somme, formée, de son côté, par une valeur de consigne d'accélération (bw) et de la différence pondérée d'un premier facteur de poids (c), provenant de l'intégrale temporelle de la valeur de consigne d'accélération (bw) et du produit de chaque nombre de tours respectif mesuré (n1) et du facteur de correction (k1), et de la différence, pondérée d'un second facteur de poids (c1) et d'une fonction de temps (Fg), de la vitesse (vs) et du produit du nombre de tours (n1) majoré de la valeur de consigne de glissement du champ rotatif ($\pm \Delta n$), aux fins de commande de générateurs de fréquences (FG1, FG2), alimentant respectivement les entraînements (M1, M2) conçus sous forme de moteurs asynchrones.

8. Procédé selon spécification 5 ou 7, caractérisé par le fait que l'intégration de la valeur de consigne d'accélération (bw) commence, dans chaque cas, lorsque le nombre de tours (n1) ou la vitesse (vs) change, passant de zéro à un nombre fini, et que l'intégration est exécutée comme simulation du comportement en marche du véhicule, en tenant compte de la résistance à l'avancement dépendant de la vitesse.

9. Procédé selon l'une des spécifications 5 à 8, caractérisé par le fait que la valeur de consigne d'accélération (bw) en question est déterminée par un calcul temps/but dirigé par un horaire, en minimalisant la consommation d'énergie par exploitation de l'accélération et du ralentissement admissibles maximum.

10. Procédé selon l'une des spécifications de 3 à 9, caractérisé par le fait que chaque charge d'essieu en question (I1) est mesurée ou calculée sur la base du comptage des passagers.

11. Véhicule automoteur ferroviaire, notamment train ferroviaire à plusieurs essieux ou groupes d'essieux (A1, A2), pourvus chacun d'un dispositif d'entraînement (M1, B1; M2, B2) individuel, présentant un moteur asynchrone, et de tachymètres (DM1, DM2), disposés sur tous les essieux ou groupes d'essieux (A1, A2), et dont les fils de signaux sont reliés à un dispositif de commande (STV), côté entrée, lequel calcule, en tant que facteur de correction (k1), en marche exempte d'entraînement et de freinage, le rapport existant entre les nombres de tours (n1, n2) respectivement mesurés et une valeur de référence (bz) représentant la vitesse du véhicule, et l'enregistre dans une mémoire (Sp1), et donnant, côté sortie, en tenant compte des nombres de tours (n1, n2) et du facteur de correction (k1), un signal de commande du moment de rotation aux dispositifs d'entraînement (M1, B1; M2, B2), une valeur de consigne de glissement du champ de rotation ($\pm \Delta n$) étant allouée caractérisé par le fait que le véhicule automoteur ferroviaire est jumelable avec d'autres véhicules ferroviaires (W1), chacun des dispositifs d'entraînement (M1, B1; M2, B2) ayant sa propre installation de réglage (RA1, RB1; Ra2, RB2) et que le dispositif de commande (STV) calcule et mémorise, à partir de chacun des nombres de tours (n1, n2) mesurés, une valeur de correction (k1, k2) respective, en tenant compte de la valeur de référence de vitesse (bz), commune à tous les véhicules automoteurs (W1), et alloue, sur la base des nombres de tours mesurés constamment (n1, n2) et des facteurs de correction correspondants (k1, k2) de chaque installation de réglage correspondante (RA1, RB1; RA2, RB2), un moment de rotation (dm1, dm2; db1, db2), de sorte que les forces motrices ou les puissances de freinage soient les mêmes sur tous les pourtours de roues, indépendamment des diamètres de roues, ou que toutes les roues soient entraînées avec le même coefficient d'adhérence.

12. Train de véhicules selon spécification 11, caractérisé par le fait que ses véhicules automoteurs ferroviaires (W1) sont reliés entre eux à l'aide d'une conduite de raccordement (bus), à laquelle le dispositif de commande (STV) et les installations de réglage (RA1, RA2; RB1, RB2) sont reliés, et par l'intermédiaire de laquelle ces derniers se transmettent, entre eux, une valeur de consigne d'accélération (bw), un signal de course libre (fl) et la valeur de référence (bz), un calculateur but-temps, servant de donneur de valeur de consigne (sg) pour la valeur de consigne d'accélération (bw), et le signal de course libre (fl) résultant, par une connexion OU, câblée sur la ligne de bus, des signaux d'allocation de moment de rotation (dm1, dm2; db1, db2), et le signal de référence (bz) étant formé par une superposition ou une commutation parallèle des signaux de nombres de tours (n1, n2), sur la ligne de bus, à partir des valeurs de nombres de tours minimum, maximum ou moyennes des valeurs (n1, n2), ou le signal de référence (bz) y arrivant, sous forme d'un signal de vitesse (vs) d'un tachomètre (VM).

13. Train de véhicules ferroviaires ou véhicule automoteur sur rail selon spécification 11 ou 12, caractérisé par le fait que la valeur de consigne d'accélération (bw) et le facteur de correcton (k1) sont conduits, côté entrée, à un premier multiplieur (Mu1, Mu3, Mu3''), et que le produit y formé est conduit à un second multiplieur (Mu2, Mu4), dont la seconde entrée est reliée respectivement à un appareil de mesure de la charge d'essieu (LM1, LM2) correspondant, et que le second multiplieur (Mu2, Mu4) amène le signal d'allocation du moment de rotation (dm1, dm1') à un régleur de moment de rotation contenu dans l'installation de réglage (RI1, RI1'), conçu comme régulateur de courant, tension ou phase, avec caractéristique de moment de couple.

14. Train de véhicules ferroviaires ou véhicule automoteur sur rails selon spécification 13, caractérisé par le fait qu'en dehors de la valeur d'accélération (bw) la différence entre la valeur de consigne d'accélération (bw), amenée par l'intermédiaire d'un intégrateur (Ig2, Ig3), et le signal de sortie d'un troisième multiplieur (Mu5, Mu5'), aux entrées duquel le nombre de tours respectif (n1) et le facteur de correction (k1) correspondant sont amenés, est additionnée, à l'aide d'un premier additionneur (Ad3, Ad4) avec un premier facteur de poids (c, c'), ou que, à l'aide du premier additionneur (Ad4), avec un second facteur de poids (c1), le signal de sortie d'un second additionneur (Ad5), le signal de vitesse (vs) et, en soustraction, le signal de sortie du troisième multiplieur (Mu5) sont conduits au premier multiplieur (Mu1, Mu3, Mu3'').

15. Train de véhicules ferroviaires ou véhicule automoteur sur rails selon l'une des spécifications de 11 à 14, caractérisé par le fait que la valeur de consigne d'accélération (bw) est conduite à un intégrateur (IG1), dont le signal de sortie est amené respectivement à un diviseur (Di1), auquel le facteur de correction (k1) est conduit en tant que diviseur et dont le signal de sortie est conduit à un troisième additionneur (Ad1), auquel la valeur de consigne de glissement du champ rotatif ($\pm\Delta n$) – calculé de sorte à donner un couple de rotation optimal – est conduite, à la seconde entrée, et dont le signal de sortie, en tant qu'allocation de fréquence (us1), est amené, chaque fois, à un générateur de fréquences (FG1) alimentant le moteur d'entraînement (Mo).

16. Train de véhicules ferroviaires ou véhicule automoteur sur rails selon spécification 14 ou 15, caractérisé par le fait que l'intégrateur (Ig1, Ig2, Ig2") intègre en dépendance de la vitesse, conformément au comportement en marche du véhicule.

17. Train de véhicules ferroviaires ou véhicule automoteur sur rails selon spécifications de 11 à 16, caractérisé par le fait que le nombre de tours (n1) et la valeur de consigne de glissement du champ rotatif ($\pm$n), calculé de sorte qu'il en résulte un couple de rotation optimal, sont amenés, côté entrée, à un quatrième additionneur (Ad2), et que son signal de sortie est conduit au générateur de fréquences (FG1).

18. Train de véhicules ferroviaires ou véhicule automoteur sur rails selon l'une des spécifications de 11 à 17, caractérisé par le fait que les nombres de tours (n1, n2) sont obtenus à partir de signaux induits par champs de rémanence dans les moteurs (Mo) des entraînements (M1, M2), à l'état exempt d'entraînement et que les nombres de tours (n1, n2) sont déterminés de préférence à partir de tensions induites dans les moteurs (Mo), à l'état d'entraînement ou de freinage.

0 080 139

Fig.1

Fig.4

15

0 080 139

Fig.2

Fig.3

Fig.3a